# EUROPÄISCHE PATENTANMELDUNG

(11) **EP 2 930 825 A1**
(43) Veröffentlichungstag der Anmeldung: **14.10.2015**
(21) Anmeldenummer: 14164398.1
(22) Anmeldetag: 11.04.2014
(51) Int. Cl.: H02K 1/27, H02K 15/03, H02K 15/12

(54) **Montage von Permanentmagneten auf einem Rotor einer elektrischen Maschine**

(71) Anmelder: Siemens Aktiengesellschaft, 80333 München (DE)
(72) Erfinder: Hartmann, Ulrich, 14197 Berlin (DE); Junge, Martin, 94481 Grafenau (DE); Richter, Friederike, 10963 Berlin (DE); Schwengber, Robert, 15907 Lübben (DE); Urlhart, Bernhard, 94036 Passau (DE); Walberer, Georg, 95506 Kastl (DE); Weidemann, Michael, 10551 Berlin (DE)

(57) **Zusammenfassung**

Die Erfindung betrifft einen permanenterregten Rotor einer elektrischen Maschine. Um einen vergleichsweise langlebigen, permanenterregten Rotor bzw. ein Verfahren zu dessen Herstellung bereitzustellen, wird vorgeschlagen, dass der Rotor
- eine Oberfläche (1) mit im Wesentlichen in axialer Richtung verlaufenden Vorsprüngen (2), welche aus dem Rotor herausragen,
wobei der jeweilige Vorsprung (2) derart ausgestaltet ist, dass zwischen dem jeweiligen Vorsprung (2) und der Oberfläche (1) zumindest eine Nut (3) ausgebildet wird,
wobei zumindest zwei benachbarte Vorsprünge (2) derart ausgestaltet sind, dass die zumindest eine Nut (3) des jeweiligen Vorsprungs (2) zum Bereich zwischen den beiden benachbarten Vorsprüngen (2) hin offen ist,
- eine jeweilige Abdeckung (4), welche derart angeordnet ist, dass sie in die jeweilige, zumindest eine Nut (3) von zwei benachbarten Vorsprüngen (2) eingreift,
- Dichtmasse (5), welche zwischen der jeweiligen Abdeckung (4) einerseits und dem jeweiligen Vorsprung (2) und/oder der Oberfläche (1) im Bereich des jeweiligen Vorsprungs (2) andererseits angebracht ist,
- zumindest einen Permanentmagneten (6), welcher jeweils in einen Zwischenraum (7) zwischen der jeweiligen Abdeckung (4) und der Oberfläche (1) eingebracht ist, und
- Vergussmasse (8) aufweist, welche in den zwischen dem jeweiligen, in den Zwischenraum (7) eingebrachten Permanentmagneten (6) einerseits und der jeweiligen Abdeckung (4) und/oder der Oberfläche (1) andererseits verbleibenden Hohlraum (9) eingebracht ist.

## Beschreibung

Die Erfindung betrifft einen permanenterregten Rotor einer elektrischen Maschine, eine elektrische Maschine mit einem derartigen Rotor sowie ein Verfahren zur Montage zumindest eines Permanentmagneten auf einer Oberfläche eines Rotors einer elektrischen Maschine.

Ein derartiger Rotor bzw. ein derartiges Verfahren kommen beispielsweise bei permanentmagneterregten Windkraftgeneratoren bzw. deren Herstellung zum Einsatz. Bei einer derartigen elektrischen Großmaschine müssen in der Regel zahlreiche aufmagnetisierte Magnete am Läufer der Maschine montiert und befestigt werden, da eine nachträgliche Magnetisierung nicht möglich ist. Aufgrund der hohen Korrosionsneigung der Magnete ist ein Schutz derselben gegenüber Umweltbedingungen, wie z.B. Feuchte, aggressive Medien, notwendig. Diese Forderungen stehen im Widerspruch zu einer kostengünstigen, rationellen Fertigung, insbesondere bei hohen Stückzahlen.

Die Befestigung der Magnete wurde bisher beispielsweise durch Kleben der Einzelmagnete mit einer zusätzlichen Bandage als Sicherung und Schutz vor Umwelteinflüssen erreicht, insbesondere bei Innenläufern. Weiterhin ist bekannt, die Einzelmagnete in Hauben zu kleben bzw. zu vergießen, wobei die Hauben auf Trägerplatten montiert werden und die Trägerplatte auf dem Rotor befestigt werden. In axialer Richtung werden je Pol mehrere Trägerplatten hintereinander angeordnet. Bei kleineren Maschinen ist die Montage in Taschen bekannt, in die die Magnete eingeschoben und verklebt werden. Ferner sind Magnetcover bekannt, welche auf die Rotorgrundplatte geschweißt werden, wobei anschließend die Magnete eingeschoben und vergossen werden.

Aus der EP2410633A1 ist eine Rotoranordnung mit Permanentmagneten bekannt, welche einen Rotor, mehrere nicht-magnetische profilförmige Röhren und mehrere Permanentmagnete umfasst. Die Röhren definieren dabei jeweils einen geschlossenen Kanal und sind am Umfang einer Außenseite des Rotors angebracht, wobei die Permanentmagnete in den Röhren angeordnet sind.

Aus der AT184978B ist ein Polrad für Synchronmaschinen bekannt, wobei ein jeweiliger Permanentpol mit einem Polschuh ausgerüstet ist, der sich über Zwischenstücke gegen entsprechend geformte nicht aus Permanentmagnetmaterial bestehende Pole stützt, womit unter der Wirkung der Fliehkräfte im Material der Permanentmagnetpole nur Druckbeanspruchungen auftreten können.

Der Erfindung liegt die Aufgabe zugrunde, einen vergleichsweise langlebigen, permanenterregten Rotor bzw. ein Verfahren zu dessen Herstellung bereitzustellen.

Diese Aufgabe wird durch einen Rotor der eingangs genannten Art dadurch gelöst, dass der Rotor
- eine Oberfläche mit im Wesentlichen in axialer Richtung verlaufenden Vorsprüngen, welche aus dem Rotor herausragen, wobei der jeweilige Vorsprung derart ausgestaltet ist, dass zwischen dem jeweiligen Vorsprung und der Oberfläche zumindest eine Nut ausgebildet wird, wobei zumindest zwei benachbarte Vorsprünge derart ausgestaltet sind, dass die zumindest eine Nut des jeweiligen Vorsprungs zum Bereich zwischen den beiden benachbarten Vorsprüngen hin offen ist,
- eine jeweilige Abdeckung, welche derart angeordnet ist, dass sie in die jeweilige, zumindest eine Nut von zwei benachbarten Vorsprüngen eingreift,
- Dichtmasse, welche zwischen der jeweiligen Abdeckung einerseits und dem jeweiligen Vorsprung und/oder der Oberfläche im Bereich des jeweiligen Vorsprungs andererseits angebracht ist,
- zumindest einen Permanentmagneten, welcher jeweils in einen Zwischenraum zwischen der jeweiligen Abdeckung und der Oberfläche eingebracht ist, und
- Vergussmasse aufweist, welche in den zwischen dem jeweiligen, in den Zwischenraum eingebrachten Permanentmagneten einerseits und der jeweiligen Abdeckung und/oder der Oberfläche andererseits verbleibenden Hohlraum eingebracht ist.

Weiterhin wird diese Aufgabe durch eine elektrische Maschine mit einem derartigen Rotor gelöst.

Schließlich wird diese Aufgabe durch ein Verfahren zur Montage zumindest eines Permanentmagneten auf einer Oberfläche eines Rotors einer elektrischen Maschine mit den folgenden Verfahrensschritten gelöst:
- Ausgestalten von im Wesentlichen in axialer Richtung verlaufenden Vorsprüngen, welche aus dem Rotor herausragen, wobei der jeweilige Vorsprung derart ausgestaltet ist, dass zwischen dem jeweiligen Vorsprung und der Oberfläche zumindest eine Nut ausgebildet wird,
   wobei zumindest zwei benachbarte Vorsprünge derart ausgestaltet sind, dass die zumindest eine Nut des jeweiligen Vorsprungs zum Bereich zwischen den beiden benachbarten Vorsprüngen hin offen ist,
- derartiges Anordnen einer jeweiligen Abdeckung, dass sie in die jeweilige, zumindest eine Nut von zwei benachbarten Vorsprüngen eingreift,
- Anbringen von Dichtmasse zwischen der jeweiligen Abdeckung einerseits und dem jeweiligen Vorsprung und/oder der Oberfläche im Bereich des jeweiligen Vorsprungs andererseits,
- Einbringen zumindest eines Permanentmagneten in einen Zwischenraum zwischen der jeweiligen Abdeckung und der Oberfläche, und
- Einbringen von Vergussmasse in den zwischen dem jeweiligen, in den Zwischenraum eingebrachten Permanentmagneten einerseits und der jeweiligen Abdeckung und/oder der Oberfläche andererseits verbleibenden Hohlraum.

Auf dem Grundmaterial des gebogenen Rotormantels werden beispielsweise ebene Flächen für die Auflage der Magnete eingebracht, vorzugsweise gefräst. Das Einbringen der Nuten in den gebogenen Rotormantel kann als Bestandteil des Fräsens der ebenen Auflageflächen für die Magnete und somit fast kostenneutral ausgeführt werden. In den Pollücken, das heißt in den Flächen zwischen den einzelnen Magnetpolreihen, werden die Vorsprünge herausgearbeitet. Die entstehenden Nuten dienen zur Aufnahme von den Abdeckungen, welche beispielsweise als vorgebogene Bleche ausgeführt sind. Vorzugsweise sind die Abdeckungen nur an einer axialen Stirnseite offen, um später die Magnete einschieben zu können.

Im Anschluss an die Montage der Abdeckungen werden die Schnittstellen zwischen der jeweiligen Abdeckung und den Rotormantel ringsum mit einer Dichtmasse versehen. Nach dem Einschieben der Magnete, insbesondere durch die offene Stirnseite, wird der Hohlraum zwischen den Magneten, der jeweiligen Abdeckung und dem Rotormantel mittels einer Vergussmasse gefüllt. Die Dichtmasse im Außenbereich verhindert dabei das Austreten der vergleichsweise dünnflüssigen Vergussmasse. Insbesondere hat die Dichtmasse die Aufgabe, die Vergussmasse vor dem Aushärten am Austritt zu hindern. Als Vergussmasse kann beispielsweise ein Epoxidharz zum Einsatz kommen.

Insbesondere ist die Dichtmasse elektrisch nicht leitend, nicht lötbar und/oder nicht schweißbar. Für eine besonders leichte Verarbeitbarkeit der Dichtmasse weist die Dichtmasse zum Zeitpunkt ihrer Einbringung einen E-Modul von weniger als 10 kN/mm², insbesondere weniger als 1 kN/mm², bei Normbedingungen auf. Alternativ oder zusätzlich weist die Dichtmasse zum Zeitpunkt ihrer Einbringung eine Viskosität von weniger als 3x10⁶ mPas, insbesondere eine Viskosität im Bereich zwischen 10⁴ mPas und 5x10⁵ mPas, bei Normbedingungen auf. Vorzugsweise werden die Dichtmasse und die Vergussmasse derart gewählt, dass die Vergussmasse zumindest um eine Größenordnung dünnflüssiger als die Dichtmasse ist. Insbesondere ist die Dichtmasse im getrockneten bzw. ausgehärteten Zustand bzw. während des Einbringens der Vergussmasse zumindest um eine Größenordnung dickflüssiger als die Vergussmasse während des Einbringens der Vergussmasse.

Gute Ergebnisse lassen sich insbesondere erzielen, wenn die Dichtmasse schon angebracht wurde, der zumindest eine Permanentmagnet schon eingebracht wurde und der verbleibende Hohlraum vor dem Einbringen der Vergussmasse zumindest teilweise evakuiert wird.

Vorzugsweise ist die jeweilige Abdeckung derart in die jeweilige Nut von zwei benachbarten Vorsprüngen eingebracht, dass die jeweilige Abdeckung zumindest anhand der beiden benachbarten Vorsprünge mittels eines Formschlusses in radialer Richtung und in Umfangsrichtung fixiert ist. Zusätzlich kann vorgesehen sein, dass die jeweilige Abdeckung gegen den jeweiligen Vorsprung verspannt wird. Weiterhin kann eine geeignete, beispielsweise wiederverwendbare Vorrichtung bei einer Serienmontage zum Einsatz kommen, wobei die Vorrichtung beispielsweise eine Leiste mit einem flexiblen Material zur Abdichtung aufweist. Dadurch kann die Dichtmasse leicht in die Fuge zwischen der jeweiligen Abdeckung einerseits und dem jeweiligen Vorsprung und/oder der Oberfläche im Bereich des jeweiligen Vorsprungs andererseits eingebracht bzw. dort gehalten werden. Insbesondere kann die Dichtmasse in Form einer so genannten Kehlnaht angebracht werden, welche an der Außenseite der jeweiligen Abdeckung in der Nachbarschaft des jeweiligen Vorsprungs angebracht wird, so dass die Fuge zwischen der jeweiligen Abdeckung einerseits und dem jeweiligen Vorsprung von außen abgedichtet wird.

Ein großer Vorteil gegenüber der bisher verwendeten Lösung, dem Anschweißen von Abdeckungen, ist das Entfallen der Schweißnähte zwischen der jeweiligen Abdeckung und dem Rotormantel. Dies spart Fertigungsschritte und erhöht die Prozesssicherheit, weil das Schweißen der im Verhältnis zum Rotormantel sehr dünnen Abdeckungen sehr anspruchsvoll ist. Weiterhin kann mittels des vorgeschlagenen Rotors bzw. Verfahrens die Zahl möglicher Lieferanten erhöht werden, da die Verbindung zwischen insbesondere dünnen Edelstahl-Cover-Blechen und dem massiven Rotormantel einen langwierigen Versuchsprozess voraussetzt. Zusätzlich wird der Korrosionsschutz der bisher blanken Nuten vom Lieferanten bis zum Einschieben der Cover bzw. der Magnete verbessert. Aufgrund der nicht notwendigen blanken Flächen zum Schweißen, kann die Grundierung über das gesamte Bauteil erfolgen. Dies schützt insbesondere die Nuten der Magnete vor Korrosion.

Dank der Dichtmasse kann zuverlässig ein unerwünschtes Austreten der Vergussmasse aus dem Hohlraum zwischen dem jeweiligen Permanentmagneten und der jeweiligen Abdeckung bzw. der Oberfläche verhindert werden. Dadurch wird insbesondere sichergestellt, dass die in den Hohlraum eingebrachte Vergussmasse den Hohlraum in ausreichendem Maße ausfüllt und im Hohlraum verbleibt bis sie ausgehärtet ist. Dies verhindert in besonderem Maße eine vorzeitige Korrosion des jeweiligen Permanentmagneten, da der jeweilige Permanentmagnet mittels der Vergussmasse von Luft, Feuchte und Verschmutzungen abgeschirmt wird.

Beispielsweise kann die vorgeschlagene elektrische Maschine mit einem derartigen Rotor als Windkraftgenerator ausgeführt sein, wobei der Rotor als Außenläufer oder Innenläufer ausgestaltet sein kann. Insbesondere bei den rauen Umgebungsbedingungen von Windkraftgeneratoren, welche im Meer installiert sind, kann somit die Lebensdauer des Rotors dank der vorgeschlagenen Maßnahmen entscheidend verlängert werden. Auch falls die vorgeschlagene elektrische Maschine beispielsweise als Mühlenantrieb ausgeführt wird, wird durch diese Maßnahmen die Lebensdauer des Rotors trotz der bei einer Mühle herrschenden widrigen Umwelteinflüsse verlängert.

Bei einer vorteilhaften Ausgestaltung der Erfindung ist zumindest einer der Vorsprünge im Wesentlichen L-förmig ausgestaltet.

Ein derartiger Vorsprung weist einen in radialer Richtung aus dem Rotor herausragenden Steg auf, an dessen Ende eine Art Gurt angeordnet ist, welcher im Wesentlichen parallel zur übrigen Oberfläche des Rotors ausgerichtet ist und welcher sich in Umfangsrichtung betrachtet ausgehend von dem Steg in nur eine Richtung erstreckt. Zwischen dem Gurt und dem restlichen Rotor verbleibt dabei die weiter oben schon erläuterte Nut, in welche ein Ende der Abdeckung eingebracht wird, um diese vorzugsweise formschlüssig zu befestigen.

Bei einer weiteren vorteilhaften Ausgestaltung der Erfindung ist zumindest einer der Vorsprünge im Wesentlichen T-förmig ausgestaltet.

Ein derartiger Vorsprung weist einen in radialer Richtung aus dem Rotor herausragenden Steg auf, an dessen Ende eine Art Gurt angeordnet ist, welcher im Wesentlichen parallel zur übrigen Oberfläche des Rotors ausgerichtet ist und welcher sich in Umfangsrichtung betrachtet ausgehend von dem Steg in beide Richtungen erstreckt. Zwischen dem Gurt und dem restlichen Rotor verbleiben somit zwei der weiter oben schon erläuterten Nuten. In jede der beiden Nuten wird ein Ende einer jeweiligen Abdeckung eingebracht, um diese vorzugsweise formschlüssig zu befestigen.

Bei einer weiteren vorteilhaften Ausgestaltung der Erfindung umfasst die Dichtmasse einen Lack.

Lack ist vergleichsweise leicht zu verarbeiten und schließt zuverlässig die verbleibende Lücke zwischen der jeweiligen Abdeckung einerseits und dem jeweiligen Vorsprung und/oder der Oberfläche im Bereich des jeweiligen Vorsprungs andererseits. Somit kann gewährleistet werden, dass keine Vergussmasse unerwünscht durch die Lücke aus dem oben erläuterten Zwischenraum austritt. Abhängig von den Materialeigenschaften des Lackes wird die Vergussmasse vorzugsweise erst eingebracht, nachdem der Lack ausreichend getrocknet bzw. ausgehärtet ist.

Bei einer weiteren vorteilhaften Ausgestaltung der Erfindung umfasst die Dichtmasse einen Kunststoff, insbesondere Silikon.

Kunststoffe und insbesondere Silikon sind besonders einfach zu verarbeiten und erlauben, die Vergussmasse schon unmittelbar nach dem Anbringen der Dichtmasse in den verbleibenden Hohlraum einzubringen. Vorzugsweise ist der Kunststoff bzw. das Silikon mit einer derartigen Viskosität bzw. einem derartigen E-Modul gewählt, dass der Kunststoff bzw. das Silikon insbesondere durch Einspritzen in die oben erläuterte Fuge angebracht werden kann und dabei die Fuge zuverlässig und komplett abgedichtet wird. Hierzu kann die Dichtmasse beispielsweise in Form der oben erläuterten Kehlnaht angebracht werden. Insbesondere ist der Kunststoff bzw. das Silikon weiterhin mit einer derartigen Viskosität ausgestattet, dass unmittelbar nach dem Anbringen der Dichtmasse schon die Vergussmasse in den verbleibenden Hohlraum eingebracht werden kann, ohne dass die Vergussmasse durch die mit der Dichtmasse gefüllte Fuge hindurch austreten kann. Dies wird beispielsweise dadurch erreicht, dass die Dichtmasse schon während ihrer Verarbeitung um mindestens eine Größenordnung dickflüssiger als die Vergussmasse ist.

Bei einer weiteren vorteilhaften Ausgestaltung der Erfindung umschließt die Vergussmasse den zumindest einen Permanentmagneten vollständig.

Durch das vollständige Umschließen des jeweiligen Permanentmagneten durch die Vergussmasse wird sichergestellt, dass keine Luft, keine Feuchte oder ein sonstiger Schmutz in Kontakt mit dem jeweiligen Permanentmagneten kommt. Dadurch wird eine vorzeitige Korrosion des Permanentmagneten unterbunden, wodurch der Rotor insgesamt besonders langlebig wird. Insbesondere wird die vollständige Umschließung des jeweiligen Permanentmagneten dadurch erreicht, dass der jeweilige erläuterte Hohlraum komplett mit der Vergussmasse ausgefüllt wird. Hierzu kann der verbleibende Hohlraum evakuiert werden und/oder die Vergussmasse mit einem gewissen Druck in den Hohlraum eingebracht werden, wobei die Dichtmasse vorzugsweise derart gewählt ist, dass sie eine ausreichende Abdichtung gewährleistet. Insbesondere ist die Dichtmasse zum Zeitpunkt des Einbringens der Vergussmasse um mindestens zwei Größenordnungen dickflüssiger als die Vergussmasse.

Bei einer weiteren vorteilhaften Ausgestaltung der Erfindung erstreckt sich die jeweilige Abdeckung im Wesentlichen in axialer Richtung und weist einen im Wesentlichen U-förmigen Querschnitt auf.

Beispielsweise ist der jeweilige Permanentmagnet im Wesentlichen quaderförmig ausgestaltet, wobei die jeweilige Abdeckung entsprechend ausgestaltet ist, um die der Oberfläche abgewandte Seite des jeweiligen Permanentmagneten gut zu umgreifen. Somit kann eine möglichst gleichmäßig verteilte Haltekraft auf den jeweiligen Permanentmagneten ausgeübt werden.

Bei einer weiteren vorteilhaften Ausgestaltung der Erfindung ist der Rotor als Innenläufer ausgeführt.

Entsprechend die jeweilige Abdeckung an der radial äußeren Mantelfläche Rotors angebracht. Insbesondere für vergleichsweise schnell laufende Maschinen bzw. Maschinen mit einem großen Durchmesser von mehreren Metern gewährleistet der vorgeschlagene Rotor eine sichere Befestigung des jeweiligen Permanentmagneten. Insbesondere werden dadurch unerwünschte Vibrationen des jeweiligen Permanentmagneten in Bezug auf die jeweilige Abdeckung bzw. die Oberfläche unterdrückt, wodurch wiederum die Langlebigkeit des Rotors erhöht wird.

Im Folgenden wird die Erfindung anhand der in den Figuren dargestellten Ausführungsbeispiele näher beschrieben und erläutert. Es zeigen:
- FIG 1: ein erstes Ausführungsbeispiel des erfindungsgemäßen Rotors,
- FIG 2: ein zweites Ausführungsbeispiel des erfindungsgemäßen Rotors, und
- FIG 3: ein drittes Ausführungsbeispiel des erfindungsgemäßen Rotors.

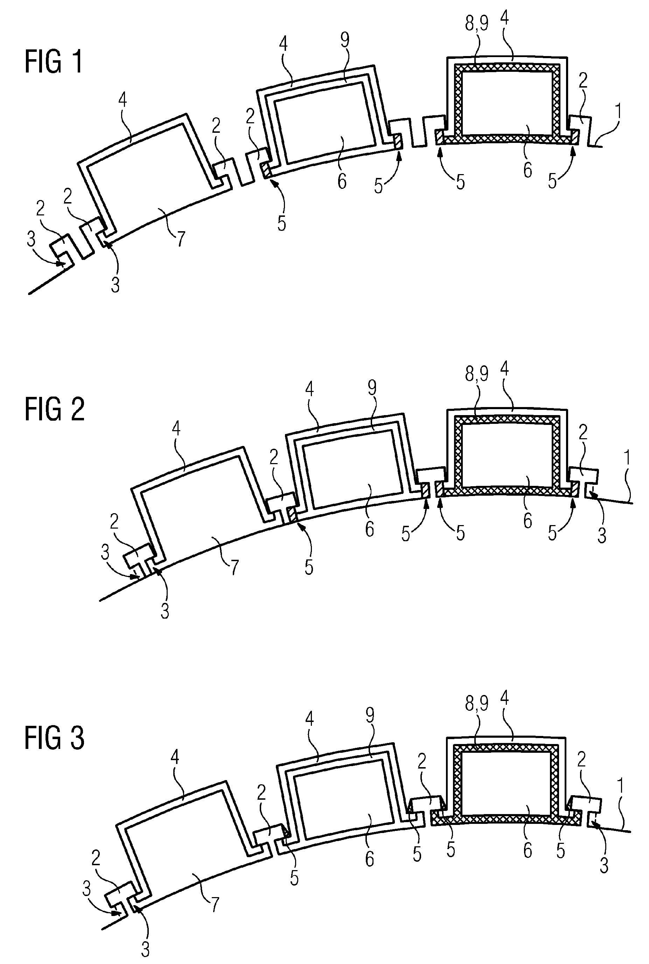

Figur 1 zeigt ein erstes Ausführungsbeispiel des erfindungsgemäßen Rotors. Dargestellt ist dabei ein Ausschnitt eines Querschnittes senkrecht zu einer Rotationsachse des Rotors, wobei der Rotor im Rahmen des Ausführungsbeispiels als Innenläufer ausgeführt ist. Aus Gründen der Übersichtlichkeit und damit Verfahrensschritte des erfindungsgemäßen Verfahrens illustriert werden können, wurde auf einige Details in der Darstellung des Rotors verzichtet.

Der Rotor weist eine Oberfläche 1 mit Vorsprüngen 2 auf, welche aus dem Rotor herausragen. Die Vorsprünge 2 verlaufen im Wesentlichen in axialer Richtung und sind im Rahmen des Ausführungsbeispiels L-förmig ausgeführt, so dass eine Nut 3 zwischen dem jeweiligen Vorsprung 2 und der Oberfläche 1 ausgebildet wird. Die Vorsprünge 2 sind paarweise derart ausgestaltet, dass die jeweilige Nut 3 zum Bereich zwischen den beiden benachbarten Vorsprüngen 2 hin offen ist. In diesen jeweiligen Bereich wird eine jeweilige Abdeckung 4 derart angeordnet, dass die jeweilige Abdeckung 4 in die jeweilige Nut 3 der zwei benachbarten Vorsprünge 2 eingreift. Dadurch, dass jeweils ein Ende der jeweiligen Abdeckung 4 in eine jeweilige Nut 3 eingreift, wird die jeweilige Abdeckung 4 anhand der beiden benachbarten Vorsprünge 2 mittels eines Formschlusses in radialer Richtung und in Umfangsrichtung fixiert.

Zwischen der jeweiligen Abdeckung 4 und der Oberfläche 1 verbleibt dabei ein Zwischenraum 7, in welchen jeweils zumindest ein Permanentmagnet 6 eingebracht wird. Zwischen dem jeweiligen Permanentmagneten 6 einerseits und der jeweiligen Abdeckung 4 bzw. der Oberfläche 1 andererseits verbleibt ein Hohlraum 9. Der Rotor weist eine Dichtmasse 5 auf, welche zwischen der jeweiligen Abdeckung 4 einerseits und dem jeweiligen Vorsprung 2 bzw. der Oberfläche 1 im Bereich des jeweiligen Vorsprungs 2 andererseits angebracht ist. Beispielsweise kann die Dichtmasse 5 einen Lack oder einen Kunststoff, insbesondere Silikon, umfassen.

Ferner weist der Rotor eine Vergussmasse 8 auf, welche in den jeweiligen, um den jeweiligen Permanentmagneten 6 verbleibenden Hohlraum 9 eingebracht wird und den Hohlraum 9 vorzugsweise vollständig ausfüllt.

Figur 2 zeigt ein zweites Ausführungsbeispiel des erfindungsgemäßen Rotors. Gleiche Bezugszeichen wie in Figur 1 bezeichnen dabei gleiche Gegenstände.

Im Unterschied zum ersten Ausführungsbeispiel sind die Vorsprünge 2 gemäß dem zweiten Ausführungsbeispiel T-förmig ausgeführt. Der jeweilige Vorsprung 2 weist somit zwei Nuten 3 auf, wobei die eine Nut 3 in Umfangsrichtung zur einen Richtung und die andere Nut 3 zur anderen Richtung hin offen ist.

Figur 3 zeigt ein drittes Ausführungsbeispiel des erfindungsgemäßen Rotors.

In Abwandlung des zweiten Ausführungsbeispiels die Dichtmasse 5 in Form einer so genannten Kehlnaht angebracht, welche an der Außenseite der jeweiligen Abdeckung 4 in der Nachbarschaft des jeweiligen Vorsprungs 2 angebracht wird, so dass die Fuge zwischen der jeweiligen Abdeckung 4 einerseits und dem jeweiligen Vorsprung 2 von außen abgedichtet wird.

Die Vorsprünge können dabei wie im zweiten und dritten Ausführungsbeispiel T-förmig oder wie im ersten Ausführungsbeispiel L-förmig ausgestaltet sein.

Zusammenfassend betrifft die Erfindung einen permanent erregten Rotor einer elektrischen Maschine, eine elektrische Maschine mit einem derartigen Rotor sowie ein Verfahren zur Montage zumindest eines Permanentmagneten auf einer Oberfläche eines Rotors einer elektrischen Maschine. Um einen vergleichsweise langlebigen, permanenterregten Rotor bzw. ein Verfahren zu dessen Herstellung bereitzustellen, wird vorgeschlagen, dass der Rotor
- eine Oberfläche mit im Wesentlichen in axialer Richtung verlaufenden Vorsprüngen, welche aus dem Rotor herausragen, wobei der jeweilige Vorsprung derart ausgestaltet ist, dass zwischen dem jeweiligen Vorsprung und der Oberfläche zumindest eine Nut ausgebildet wird, wobei zumindest zwei benachbarte Vorsprünge derart ausgestaltet sind, dass die zumindest eine Nut des jeweiligen Vorsprungs zum Bereich zwischen den beiden benachbarten Vorsprüngen hin offen ist,
- eine jeweilige Abdeckung, welche derart angeordnet ist, dass sie in die jeweilige, zumindest eine Nut von zwei benachbarten Vorsprüngen eingreift,
- Dichtmasse, welche zwischen der jeweiligen Abdeckung einerseits und dem jeweiligen Vorsprung und/oder der Oberfläche im Bereich des jeweiligen Vorsprungs andererseits angebracht ist,
- zumindest einen Permanentmagneten, welcher jeweils in einen Zwischenraum zwischen der jeweiligen Abdeckung und der Oberfläche eingebracht ist, und
- Vergussmasse aufweist, welche in den zwischen dem jeweiligen, in den Zwischenraum eingebrachten Permanentmagneten einerseits und der jeweiligen Abdeckung und/oder der Oberfläche andererseits verbleibenden Hohlraum eingebracht ist. Weiterhin wird eine elektrische Maschine mit einem derartigen Rotor vorgeschlagen. Schließlich wird zur Lösung der Aufgabe ein Verfahren zur Montage zumindest eines Permanentmagneten auf einer Oberfläche eines Rotors einer elektrischen Maschine mit den folgenden Verfahrensschritten vorgeschlagen:
- Ausgestalten von im Wesentlichen in axialer Richtung verlaufenden Vorsprüngen, welche aus dem Rotor herausragen, wobei der jeweilige Vorsprung derart ausgestaltet ist, dass zwischen dem jeweiligen Vorsprung und der Oberfläche zumindest eine Nut ausgebildet wird,
   wobei zumindest zwei benachbarte Vorsprünge derart ausgestaltet sind, dass die zumindest eine Nut des jeweiligen Vorsprungs zum Bereich zwischen den beiden benachbarten Vorsprüngen hin offen ist,
- derartiges Anordnen einer jeweiligen Abdeckung, dass sie in die jeweilige, zumindest eine Nut von zwei benachbarten Vorsprüngen eingreift,
- Anbringen von Dichtmasse zwischen der jeweiligen Abdeckung einerseits und dem jeweiligen Vorsprung und/oder der Oberfläche im Bereich des jeweiligen Vorsprungs andererseits,
- Einbringen zumindest eines Permanentmagneten in einen Zwischenraum zwischen der jeweiligen Abdeckung und der Oberfläche, und
- Einbringen von Vergussmasse in den zwischen dem jeweiligen, in den Zwischenraum eingebrachten Permanentmagneten einerseits und der jeweiligen Abdeckung und/oder der Oberfläche andererseits verbleibenden Hohlraum.

## Patentansprüche

1. Rotor einer elektrischen Maschine aufweisend
- eine Oberfläche (1) mit im Wesentlichen in axialer Richtung verlaufenden Vorsprüngen (2), welche aus dem Rotor herausragen,
wobei der jeweilige Vorsprung (2) derart ausgestaltet ist, dass zwischen dem jeweiligen Vorsprung (2) und der Oberfläche (1) zumindest eine Nut (3) ausgebildet wird,
wobei zumindest zwei benachbarte Vorsprünge (2) derart ausgestaltet sind, dass die zumindest eine Nut (3) des jeweiligen Vorsprungs (2) zum Bereich zwischen den beiden benachbarten Vorsprüngen (2) hin offen ist,
- eine jeweilige Abdeckung (4), welche derart angeordnet ist, dass sie in die jeweilige, zumindest eine Nut (3) von zwei benachbarten Vorsprüngen (2) eingreift,
- Dichtmasse (5), welche zwischen der jeweiligen Abdeckung (4) einerseits und dem jeweiligen Vorsprung (2) und/oder der Oberfläche (1) im Bereich des jeweiligen Vorsprungs (2) andererseits angebracht ist,
- zumindest einen Permanentmagneten (6), welcher jeweils in einen Zwischenraum (7) zwischen der jeweiligen Abdeckung (4) und der Oberfläche (1) eingebracht ist, und
- Vergussmasse (8), welche in den zwischen dem jeweiligen, in den Zwischenraum (7) eingebrachten Permanentmagneten (6) einerseits und der jeweiligen Abdeckung (4) und/oder der Oberfläche (1) andererseits verbleibenden Hohlraum (9) eingebracht ist.

2. Rotor nach Anspruch 1,
wobei zumindest einer der Vorsprünge (2) im Wesentlichen L-förmig ausgestaltet ist.

3. Rotor nach einem der vorhergehenden Ansprüche,
wobei zumindest einer der Vorsprünge (2) im Wesentlichen T-förmig ausgestaltet ist.

4. Rotor nach einem der vorhergehenden Ansprüche,
wobei die Dichtmasse (5) einen Lack umfasst.

5. Rotor nach einem der vorhergehenden Ansprüche,
wobei die Dichtmasse (5) einen Kunststoff, insbesondere Silikon, umfasst.

6. Rotor nach einem der vorhergehenden Ansprüche,
wobei die Vergussmasse (8) den zumindest einen Permanentmagneten (6) vollständig umschließt.

7. Rotor nach einem der vorhergehenden Ansprüche,
wobei die jeweilige Abdeckung (4) sich im Wesentlichen in axialer Richtung erstreckt und einen im Wesentlichen U-förmigen Querschnitt aufweist.

8. Rotor nach einem der vorhergehenden Ansprüche,
wobei der Rotor als Innenläufer ausgeführt ist.

9. Elektrische Maschine mit einem Rotor nach einem der vorhergehenden Ansprüche.

10. Verfahren zur Montage zumindest eines Permanentmagneten (6) auf einer Oberfläche (1) eines Rotors einer elektrischen Maschine mit den folgenden Verfahrensschritten:
- Ausgestalten von im Wesentlichen in axialer Richtung verlaufenden Vorsprüngen (2), welche aus dem Rotor herausragen,
wobei der jeweilige Vorsprung (2) derart ausgestaltet ist, dass zwischen dem jeweiligen Vorsprung (2) und der Oberfläche (1) zumindest eine Nut (3) ausgebildet wird,
wobei zumindest zwei benachbarte Vorsprünge (2) derart ausgestaltet sind, dass die zumindest eine Nut (3) des jeweiligen Vorsprungs (2) zum Bereich zwischen den beiden benachbarten Vorsprüngen (2) hin offen ist,
- derartiges Anordnen einer jeweiligen Abdeckung (4), dass sie in die jeweilige, zumindest eine Nut (3) von zwei benachbarten Vorsprüngen (2) eingreift,
- Anbringen von Dichtmasse (5) zwischen der jeweiligen Abdeckung (4) einerseits und dem jeweiligen Vorsprung (2) und/oder der Oberfläche (1) im Bereich des jeweiligen Vorsprungs (2) andererseits,
- Einbringen zumindest eines Permanentmagneten (6) in einen Zwischenraum (7) zwischen der jeweiligen Abdeckung (4) und der Oberfläche (1), und
- Einbringen von Vergussmasse (8) in den zwischen dem jeweiligen, in den Zwischenraum (7) eingebrachten Permanentmagneten (6) einerseits und der jeweiligen Abdeckung (4) und/oder der Oberfläche (1) andererseits verbleibenden Hohlraum (9).
